# EUROPEAN PATENT SPECIFICATION

(11) **EP 2 155 409 B1**
(45) Date of publication and mention of the grant of the patent: **29.09.2010**
(21) Application number: 08762582.8
(22) Date of filing: 20.06.2008
(51) Int. Cl.: B09C 1/00, B09C 1/08

(54) **SOIL TREATMENT METHOD**
BODENBEHANDLUNGSVERFAHREN
PROCÉDÉ DE TRAITEMENT DU SOL

(30) Priority: 20.06.2007 GB 0711869
(43) Date of publication of application: 24.02.2010
(73) Proprietor: AQS Holdings Limited, Chelmsford Essex CM2 0AW (GB)
(72) Inventor: ARMSTRONG, Andrew William, Essex CM9 4PS (GB)
(74) Representative: Walder, Jeremy Thomas
(86) International application number: PCT/GB2008/050474
(87) International publication number: WO 2008/155583

(56) References cited:
- DE-A1- 4 126 058
- JP-A- 2005 118 727
- US-A- 4 913 586

## Description

This invention relates to a soil treatment method. In particular, it relates to a method for treating contaminated soils at a site so as to render the site free from contaminants. The method has been developed particularly for treating soils contaminated with volatile organic compounds (VOCs) such as hydrocarbons. A conventional soil treatment method is disclosed in US-4 913 586.

The treatment of soil contaminated with undesirable materials such as volatile organic compounds (VOCs), heavy metals or pesticides, is an essential preliminary step in the development of sites for construction, landscaping or other ground engineering projects. Conventionally, such contaminants have been dealt with by so-called "dig and dump" methods, but these procedures are costly in terms of the material which must be brought in to replace the excavated soil. Moreover, dig and dump methods are now generally viewed as being environmentally unacceptable.

Soil stabilisation and solidification methods, where binders are added to the contaminated soil to interact with the contaminants, have also been proposed. However, these methods serve merely to solidify or encapsulate the contaminants, so as to reduce their mobility, but do not in fact remove the contaminants from the soil, nor break them down into more environmentally acceptable materials.

Other conventional methods of treating soil so as to remove undesirable contaminants include bioremediation, where the contaminants are treated by the use of organic nutrients or biological agents. This method is often used in combination with the use of heat, windrows, or air sparging techniques, all of which are thought to promote the action of the organic nutrients or biological agents.

Although bioremediation techniques are effective to some degree, they tend to be rather slow, with a typical process taking many weeks or months to complete. Bioremediation processes also have limitations in their ability to break down soil particles, and this problem is particularly acute where the site to be treated has a high content of cohesive soils such as clays. Furthermore, the organic processes employed to remove the contaminants leave behind further benign organic residues in their place. The presence of these organic residues means that the treated soil will still be geotechnically unsound. Therefore, whilst bioremediation is a suitable technique where a site is intended to be landscaped or otherwise developed, it cannot be used by itself where a site is intended to be built upon.

The present invention seeks to address the above issues by providing a quick, environmentally acceptable method for removing unwanted contaminants from soil at a site, and which results in the production of a geotechnically sound material, such that the site is rendered suitable for construction.

Therefore, according to the present invention, there is provided a method for treating soil at a site contaminated with organic contaminants, comprising the steps of:
(a) determining characteristics of the site, including proximity of water courses, habitation and physical constraints, and sampling a volume of soil from said site;
(b) analysing said soil sample to determine soil characteristics, including particle size distribution and moisture content, and to identify and quantify contaminants therewithin;
(c) selecting a treatment composition appropriate to the identity and quantity of said contaminants and said soil and site characteristics determined in steps (a) and (b);
(d) calculating an effective amount of said treatment composition to treat said contaminants in a unit volume of soil at the site, said effective amount of treatment composition being determined by the identity and quantity of said contaminants and soil and site characteristics determined in steps (a) and (b), and the identity of the treatment composition selected in step (c), and being in the range of from 2% to 12% by weight, relative to the weight of soil being treated;
(e) excavating a volume of contaminated soil from the site;
(f) combining said selected treatment composition with the excavated soil in a ratio corresponding to said calculated effective amount;
(g) mechanically mixing the excavated soil with the soil treatment composition; and
(h) aerating said treated soil by passing it over screening machinery;
   and optionally:
(i) conditioning said treated soil by mixing with water and/or a binder composition;
   and subsequently performing at least one of the following steps:
(j) back-filling the excavated site with said treated soil;
(k) storing said treated soil for future use;
(l) disposing of said treated soil at landfill; and/or
(m) transporting said treated soil for use at a further site.

The term "soil" as used herein should be interpreted broadly to include substantially all particulate or aggregate mineral material.

The method according to the present invention has been developed for the treatment of soil contaminated with organic contaminants, such as volatile organic compounds (VOCs), and most particularly for treating soil contaminated with hydrocarbons. It is also envisaged that the method will find use for the treatment of soil which is also contaminated with other contaminants such as heavy metals or pesticides. In contrast to conventional techniques such as bioremediation, the method of the present invention is particularly suitable for use in treating contaminated soils having a high content of cohesive material, such as clays.

The site characteristics determined in step (a) of the method of the present invention include proximity of water courses and habitation, which could be impacted both by the contaminants and the treatment composition. The physical constraints of the site must also be taken into account, both in terms of the machinery which can be used, and the capability for storing excavated soil on the site - whether contaminated, part-treated or decontaminated.

Step (b) of the method of the present invention includes analysing the soil to determine its particle size distribution and moisture content. This will have an impact on the effective amount of treatment composition to be calculated in step (d), as well as the amount of mixing that will be required in step (g). For example, more cohesive soils will require greater amounts of treatment composition in order to break down the soil structure, prior to aeration in step (h). Silty and granular soils, on the other hand, do not require any such breaking-down in order to enhance the aeration process. Here, the treatment composition is used solely to volatilise the contaminants, and so less composition is required.

The term "granular" is used herein to refer to soils having particles sizes greater than 0.05 mm; the terms "silt" or "silty" are used herein to refer to soils having particle sizes in the range of 0.002 to 0.05 mm; and the terms "cohesive" or "clay" are used herein to refer to soils having particle sizes below 0.002 mm.

The nature of the contaminants identified in step (b) will inevitably also have an impact on the make-up and effective amount of the treatment composition to be determined in steps (c) and (d), and the amount of mixing that will be required following step (f). As will be described in more detail below, soil contaminated with petrol will require relatively small amounts of treatment composition and mixing; whilst soil contaminated with diesel will require more treatment composition and more mixing; and soil contaminated with oils will require still greater amounts of treatment composition and mixing.

The term "petrol" as used herein refers to hydrocarbons having in the range of from 4 to 10 carbon atoms per molecule; the term "diesel" as used herein refers to hydrocarbons having in the range of from 10 to 18 carbon atoms per molecule; and the term "oils" as used herein refers to hydrocarbons having in the range of from 18 to 26 carbon atoms per molecule. Additionally, the presence of other contaminants such as heavy metals or pesticides in the soil will generally require additional binders to be added in step (i), as will be discussed in more detail below.

The treatment composition selected in step (c) of the method of the present invention preferably comprises one or more components selected from carbonates, oxides and hydroxides of calcium. More preferably, the composition comprises calcium oxide, also referred to as lime or quicklime. Most preferably, the treatment composition consists essentially of calcium oxide.

Whilst the scope of the present invention is not bound by any theory, it is believed that the action of calcium oxide (quicklime) on hydrocarbon contaminants can be explained as follows: Firstly, the quicklime reacts with the contaminated soil material, breaking down the soil structure and thus increasing the surface area. This in turn makes the excavated soil material more granular in composition, aiding its suitability for running over screening machinery, which serves to aerate the soil and further break down the soil structure. Secondly, upon contact of the quicklime with the contaminated soil material, an exothermic reaction is generated, and the resultant heat serves to volatilise and vaporise the hydrocarbon contaminants.

Using the method of the present invention, it is believed that contamination levels at a typical construction site can be brought down to environmentally acceptable levels within a matter of days, rather than the weeks and months typically required by conventional methods.

In step (d) of the method of the present invention, the effective amount of the treatment composition is preferably calculated as a percentage weight relative to the weight of soil being treated. Most preferably, the effective amount of treatment composition is in the range of 2% to 12% by weight, relative to the weight of soil being treated.

Calculation of the effective amount of treatment composition will be influenced by two major factors: the nature of the contaminant(s) and the nature of the soil(s). The nature of the contaminant(s) influences calculation of the effective amount as follows:
- for petrol, the effective amount of treatment composition will be in the range of from 2% to 6% by weight, relative to the weight of soil being treated;
- for diesel, the amount will be in the range of from 3% to 8%; and
- for oils, the amount will be in the range of from 6% to 12%.

Similarly, the nature of the soil(s) influences calculation of the effective amount, as follows:
- for granular soils, the effective amount of treatment composition will be in the range of from 2% to 6% by weight, relative to the weight of soil being treated;
- for silt, the amount will be in the range of from 3% to 9%; and
- for clay, the amount will be in the range of from 4% to 12%.

As will be appreciated, the above ranges for the effective amount of treatment composition give rise to different preferred ranges for different combinations of contaminant(s) and soil(s), as follows:
- for granular soil contaminated with petrol, the effective amount of treatment composition will be in the range of from 2% to 6% by weight, relative to the weight of soil being treated;
- for silt contaminated with petrol, the effective amount will be in the range of from 3% to 6% by weight;
- for clay contaminated with petrol, the effective amount will be in the range of from 4% to 6% by weight;
- for granular soil contaminated with diesel, the effective amount will be in the range of from 3% to 6% by weight;
- for silt contaminated with diesel, the effective amount will be in the range of from 3% to 8% by weight;
- for clay contaminated with diesel, the effective amount will be in the range of from 4% to 8% by weight;
- for granular soil contaminated with oil, the effective amount will be substantially 6% by weight;
- for silt contaminated with oil, the effective amount will be in the range of from 6% to 9% by weight; and
- for clay contaminated with oil, the effective amount will be in the range of from 6% to 12% by weight.

It should be appreciated that, where more than one type of contaminant and/or more than one type of soil, is present in a sample, this will lead to variations in the preferred ranges as outlined above.

The effective amount of treatment composition calculated in step (d) will also be influenced by environmental factors at a site such as wind, rain, air humidity, air temperature, soil temperature and soil moisture content, which will inevitably vary from site to site and process to process. Greater amounts of treatment composition will be required in cold and damp conditions, in order to generate the required heat. In such conditions, the length of time required for the VOCs to volatilise may also need to be increased.

Step (g) preferably includes pulverising the excavated soil so as to increase its surface area. Step (g) may also include mixing the soil treatment composition with the excavated soil using a spreader and rotovator, and may occasionally involve adding water to the excavated soil, to enhance the mobility of the treatment composition.

Step (f) may include a sub-step of pre-screening the excavated soil, prior to addition of the soil treatment composition, in order to remove large stones, rocks, and bricks. Pre-screening is generally only required for granular soils, and is not practical for cohesive, silty or saturated soils.

The screening process referred to in step (h) preferably includes processes of elevating, conveying and/or discharging the combined soil and treatment composition, in order to promote aeration thereof. Carrying out these physical processes on the mixed and pulverised materials - which will by now be substantially granular and friable in nature - aids dispersion of the volatilised hydrocarbons into the air.

Steps (f) to (h) may be repeated until contaminant content in the treated soil is reduced to a satisfactory level. Where these steps are repeated, the effective amount of treatment composition may be added to the soil in several portions, with each repetition of step (f). This is particularly preferred for silty and cohesive soils. For cohesive soils, it is also preferred that the treated soil is allowed to mellow after step (h) before repeating step (f). "Mellowing" in this context means allowing the calcium oxide sufficient time to interact with cohesive material present in the soil, so as to render it friable and thus easier to break down.

The contaminant content referred to above may be determined by standard laboratory testing techniques, or alternatively may be determined on site by photoionisation detection (PID). This method is particularly suitable for volatile hydrocarbon contaminants such as petrol. The assessment of contaminant content is preferably carried out before and/or after step in the sequence of method steps (f) to (h), and before and/or after each repetition of the sequence of method steps (f) to (h).

Method step (i) is particularly required where the presence of other contaminants such as heavy metals or pesticides has been identified in step (b). Suitable materials for use in the binder composition may be selected from: cement, ground granulated blast-furnace slag (GGBS), pulverised fuel ash (PFA), and bentonite clays.

Whilst the soil treatment method of the present invention has been developed as a 'stand-alone' method, it is envisaged that it may be used in combination with other soil treatment methods such as soil stabilisation and solidification.

The scope of the present invention also extends to encompass soil, or other aggregate materials, treated according to a method as hereinbefore described. It should also be appreciated that the method of the present invention may be utilised for the treatment of material excavated from a remote location and transported to a treatment site, as well as the on-site treatment of locally excavated material.

In order that the present invention may be more clearly understood, a preferred embodiment will now be described in detail, though only by way of example, with reference to the following drawings, in which:
Figure 1 is a schematic diagram illustrating the preliminary steps of the method of the present invention; and
Figure 2 is a schematic flow-chart diagram illustrating the material treatment steps of the method of the present invention.

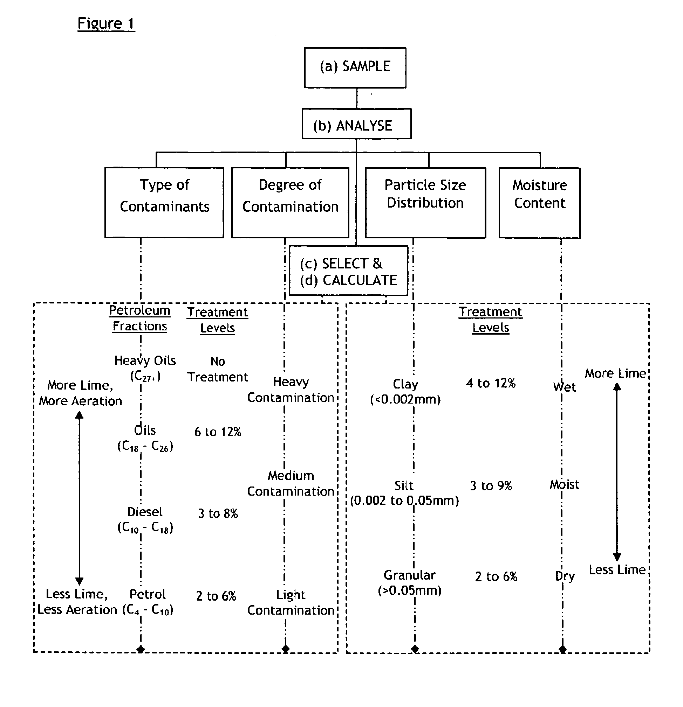

Referring first to Figure 1, there is shown an illustration of the preliminary process of analysing the soil to be treated, selecting a treatment composition appropriate to the soil properties, and calculating an effective amount of said treatment composition. The preliminary process begins by sampling (a) a volume of soil from the site. The sample is then analysed (b) to identify and quantify the type of contaminants and degree of contamination present, and to determine soil characteristics, namely particle size distribution and moisture content. The contaminants will generally be characterised as petrol, diesel or oil, and the soil will be characterised as granular, silt or clay.

The treatment composition to be utilised is then selected (c) and the required amount calculated (d) according to the contaminants and soil characteristics determined in step (b), as described above. Figure 1 shows a simplified preliminary process in which the soil sample is known to contain hydrocarbon contaminants, and so step (c) has effectively already been determined, with lime (calcium oxide) being selected as the principal active component for the soil treatment composition. The required amount of lime is then calculated (d) on a sliding scale, taking into account each of the variables determined in step (b), as follows:

Type of Contaminants: more volatile hydrocarbon contaminants such as petrol require less lime to be used in the main part of the process, and also require less aeration during the process; less volatile contaminants such as diesel or heavier oil fractions will require progressively larger amounts of lime, and more aeration. For soil contaminated with the heaviest hydrocarbon oil fractions, having 27 or more carbon atoms per molecule, the method of the present invention is not suitable, and these must instead be dealt with by conventional methods.

Degree of Contamination: light contamination calls for lesser amounts of lime; medium contamination requires treatment with greater amounts of lime; and heavy contamination again renders the soil unsuitable to be treated by the method of the present invention.

Particle Size Distribution: granular soils require the least lime; silty soils will require treatment with more lime; and soils containing clays will require still greater amounts of lime.

Moisture Content: as would be expected, dry soils require the least lime; moist soils require greater amounts; and wet soils require the greatest amounts of lime.

The above four factors combine to determine the precise amount of lime required to treat any particular soil sample.

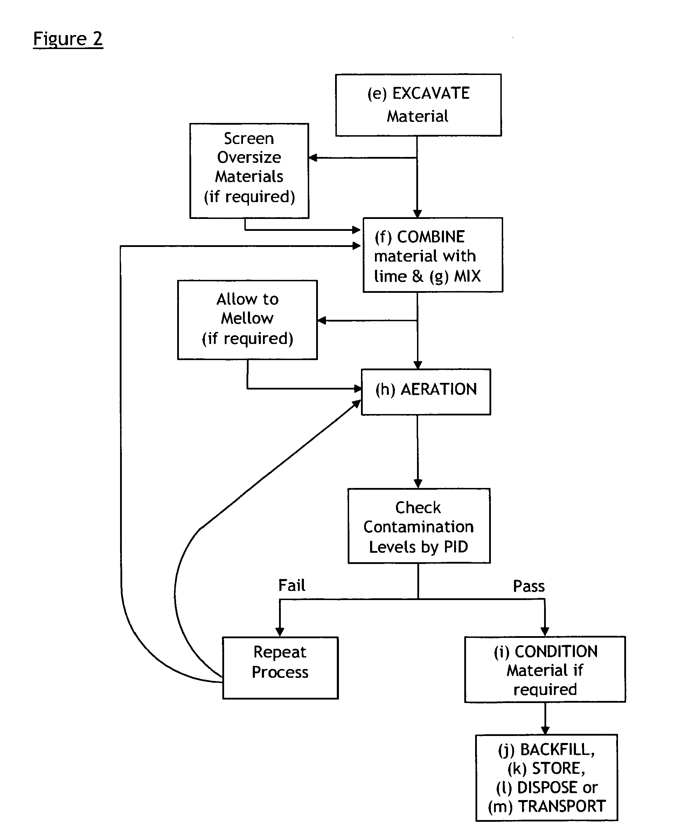

Referring now to Figure 2, there is shown an illustration of the main part of the soil treatment method according to the present invention. Following the preliminary method steps discussed above with reference to Figure 1, a volume of soil is excavated (e) ready for treatment. The excavated material may either be treated on site, or may be transported for treatment at a remote location.

As shown in Figure 2, if the excavated volume of soil contains over-sized objects such as stones and rocks, the method may be adapted to include an intermediary step of screening the material so as to remove these, before continuing to the initial treatment steps where the material is combined (f) and mechanically mixed (g) with the treatment composition determined in the preliminary method steps discussed above with reference to Figure 1.

If the excavated material contains cohesive or clay-based soils, the method may again be adapted to include a step of allowing the material to mellow, before proceeding to step (h) where the treated soil is aerated by being passed over screening machinery. Following this, the residual contamination levels are assessed by standard laboratory testing techniques, or by photo-ionisation detection (PID) if the contaminants are volatile hydrocarbons such as petrol. If the contamination levels are still higher than a pre-determined target level, the process - or parts thereof - is repeated. Depending on the degree to which the target level is exceeded, and the soil characteristics, the material may either be returned to the initial treatment stages to be combined (f) and mixed (g) with further lime; or may simply be returned for further aeration (h). Adding further lime is generally appropriate for silt and clay-based soils.

Once the contamination levels have been reduced to an acceptable level, the material is then checked and conditioned (i), if required, by mixing with water and/or a binding composition. This is particularly required where the material additionally contains other contaminants such as heavy metals or pesticides..

Finally, the treated material is either backfilled (j) into the site from which it was excavated, stored (k) at a suitable location for future use, safely disposed of (I) at landfill, or transported (m) for use at a further site

### EXAMPLES

The present invention will now be further illustrated with reference to experimental observations and data.

### Example I

Seven soil samples were taken from a test site located in Durham, United Kingdom, in accordance with step (a) of the method of the present invention. The soil samples were then analysed to determine soil characteristics and contaminants according to step (b) of the method of the present invention. The soil was found to be granular and dry, and both petrol and diesel contaminants were identified, said contaminants having between 4 and 16 carbon atoms per molecule. Taking these factors into account, a quicklime treatment composition was selected, in accordance with step (c) of the method of the present invention, and an effective amount of 3% by weight of said treatment composition, relative to the weight of soil to be treated, was calculated in accordance with step (d) of the method of the present invention.

The concentration of contaminant in each sample was then measured and recorded, following which each sample was subjected to the material treatment steps (f) to (h) of the method of the present invention, as described above with reference to Figure 2. The concentration of contaminant in each sample following treatment was then measured and recorded.

### Example II

The concentration of contaminants in the seven samples from Example I, before and after treatment according to the method of the present invention, are shown in the table below:

| Sample | Contaminant | Concentration **before** Treatment (mg/kg) | Target Concentration (mg/kg) | Concentration **after** Treatment (mg/kg) |
|---|---|---|---|---|
| 1 | TPH | 2868.8 | 1000 | <10 |
| 2 | TPH | 4353.3 | 1000 | <10 |
| 3 | TPH | 1480.4 | 1000 | <10 |
| 4 | TPH | 220894 | 1000 | <10 |
| 5 | PAH | 493 | 50 | <10 |
| 6 | PAH | 126 | 50 | <10 |
| 7 | PAH | 41910 | 50 | <10 |

| | | | | |
|---|---|---|---|---|
| Notes: "TPH" = Total Petroleum Hydrocarbons "PAH" = Polycylic Aromatic Hydrocarbons "Target Concentration" = maximum permissible level of contamination set by UK Environment Agency | | | | |

As can be seen, the results achieved in this test far exceed the levels set by the UK Environment Agency, with contaminant levels of less than 10 mg/kg being achieved in each sample.

## Claims

1. A method for treating soil at a site contaminated with organic contaminants, comprising the steps of:
(a) determining characteristics of the site, including proximity of water courses, habitation and physical constraints, and sampling a volume of soil from said site;
(b) analysing said soil sample to determine soil characteristics, including particle size distribution and moisture content, and to identify and quantify contaminants therewithin;
(c) selecting a treatment composition appropriate to the identity and quantity of said contaminants and said soil and site characteristics determined in steps (a) and (b);
(d) calculating an effective amount of said treatment composition to treat said contaminants in a unit volume of soil at the site, said effective amount of treatment composition being determined by the identity and quantity of said contaminants and soil and site characteristics determined in steps (a) and (b), and the identity of the treatment composition selected in step (c), and being in the range of from 2% to 12% by weight, relative to the weight of soil being treated;
(e) excavating a volume of contaminated soil from the site;
(f) combining said selected treatment composition with the excavated soil in a ratio corresponding to said calculated effective amount;
(g) mechanically mixing the excavated soil with the soil treatment composition; and
(h) aerating said treated soil by passing it over screening machinery;
and optionally:
(i) conditioning said treated soil by mixing with water and/or a binder composition; and subsequently performing at least one of the following steps:
(j) back-filling the excavated site with said treated soil;
(k) storing said treated soil for future use;
(l) disposing of said treated soil at landfill;
(m) transporting said treated soil for use at a further site

2. A soil treatment method as claimed in claim 1, wherein the treatment composition selected in step (c) comprises one or more components selected from carbonates, oxides and hydroxides of calcium, preferably comprises, and most preferably consists essentially of, calcium oxide (quicklime).

3. A soil treatment method as claimed in any of the preceding claims, for treating soil contaminated with volatile organic compounds (VOCs) and/or hydrocarbons.

4. A soil treatment method as claimed in claim 3, wherein in step (b), the hydrocarbon contamination identified is **characterised** as petrol, diesel or oil, according to number of carbon atoms per molecule, and/or the soil analysed is **characterised** as granular, silt or clay, according to particle size.

5. A soil treatment method as claimed in claim 4, wherein:
- the hydrocarbon contamination is **characterised** as petrol, and the effective amount of treatment composition calculated in step (d) is in the range of from 2% to 6% by weight, relative to the weight of soil being treated; or
- the hydrocarbon contamination is **characterised** as diesel, and the effective amount of treatment composition calculated in step (d) is in the range of from 3% to 8% by weight, relative to the weight of soil being treated; or
- the hydrocarbon contamination is **characterised** as oil, and the effective amount of treatment composition calculated in step (d) is in the range of from 6% to 12% by weight, relative to the weight of soil being treated.

6. A soil treatment method as claimed in claim 4 or claim 5 wherein:
- the soil is **characterised** as granular, and the effective amount of treatment composition calculated in step (d) is in the range of from 2% to 6% by weight, relative to the weight of soil being treated; or
- the soil is **characterised** as silt, and the effective amount of treatment composition calculated in step (d) is in the range of from 3% to 9% by weight, relative to the weight of soil being treated; or
- the soil is **characterised** as clay, and the effective amount of treatment composition calculated in step (d) is in the range of from 4% to 12% by weight, relative to the weight of soil being treated.

7. A soil treatment method as claimed in claim 4, wherein the hydrocarbon contamination is **characterised** as petrol, and wherein:
- the soil is **characterised** as granular, and the effective amount of treatment composition calculated in step (d) is in the range of from 2% to 6% by weight, relative to the weight of soil being treated; or
- the soil is **characterised** as silt, and the effective amount of treatment composition calculated in step (d) is in the range of from 3% to 6% by weight, relative to the weight of soil being treated; or
- the soil is **characterised** as clay, and the effective amount of treatment composition calculated in step (d) is in the range of from 4% to 6% by weight, relative to the weight of soil being treated.

8. A soil treatment method as claimed in claim 4, wherein the hydrocarbon contamination is **characterised** as diesel and wherein:
- the soil is **characterised** as granular, and the effective amount of treatment composition calculated in step (d) is in the range of from 3% to 6% by weight, relative to the weight of soil being treated; or
- the soil is **characterised** as silt, and the effective amount of treatment composition calculated in step (d) is in the range of from 3% to 8% by weight, relative to the weight of soil being treated; or
- the soil is **characterised** as clay, and the effective amount of treatment composition calculated in step (d) is in the range of from 4% to 8% by weight, relative to the weight of soil being treated.

9. A soil treatment method as claimed in claim 4, wherein the hydrocarbon contamination is **characterised** as oil, and wherein:
- the soil is **characterised** as granular, and the effective amount of treatment composition calculated in step (d) is substantially 6% by weight, relative to the weight of soil being treated; or
- the soil is **characterised** as silt, and the effective amount of treatment composition calculated in step (d) is in the range of from 6% to 9% by weight, relative to the weight of soil being treated; or
- the soil is **characterised** as clay, and the effective amount of treatment composition calculated in step (d) is in the range of from 6% to 12% by weight, relative to the weight of soil being treated.

10. A soil treatment method as claimed in any of the preceding claims, wherein the sequence of method steps (f) to (h) is repeated until contaminant content in the treated soil is reduced to a satisfactory level.

11. A soil treatment method as claimed in claim 10 wherein the treated soil is allowed to mellow after step (h) before repeating step (f).

12. A soil treatment method as claimed in any of the preceding claims, wherein step (g) includes pulverising the excavated soil and/or mixing the soil treatment composition with the excavated soil using a spreader and rotovator, and/or adding water to the excavated soil.

13. A soil treatment method as claimed in any of the preceding claims wherein step (f) includes pre-screening the excavated soil, prior to addition of the soil treatment composition.

14. A soil treatment method as claimed in any of the preceding claims, wherein step (h) includes elevating, conveying and/or discharging the combined soil and treatment composition to promote aeration.

15. A soil treatment method as claimed in any of the preceding claims, wherein the contaminant content in the soil is assessed, preferably by photoionisation detection (PID) before and/or after each step in the sequence of method steps (f) to (h), and/or before and/or after each repetition of the sequence of method steps (f) to (h).

## Patentansprüche

1. Ein Verfahren zum Behandeln eines Bodens auf einem Grundstück, welcher mit organischen Schadstoffen belastet ist, mit folgenden Verfahrensschritten
(a) Feststellen der Eigenschaften des Grundstücks, einschließlich der Nähe von Wasserläufen, Wohnungen und physikalischen Hindernissen, und Sammeln eines Volumens des Bodens von dem Grundstück;
(b) Analysieren der Bodenprobe zum Feststellen der Bodeneigenschaften, einschließlich Verteilung der Partikelgröße und des Feuchtigkeitsgehaltes, und Identifizieren und Quantifizieren der darin enthaltenen Schadstoffe;
(c) Auswählen einer Behandlungszusammensetzung, die für die in Schritt
(a) und (b) festgestellten Identität und Quantität der Schadstoffe und des Bodens sowie der Grundstückseigenschaften geeignet ist;
(d) Berechnen einer effektiven Menge der Behandlungszusammensetzung zum Behandeln der Schadstoffe in einer Volumeneinheit des Bodens auf dem Grundstück, wobei die effektive Menge der Behandlungszusammensetzung auf der Grundlage der in Schritt (a) und (b) festgestellten Identität und der Quantität der Schadstoffe und des Bodens und der Grundstückseigenschaften und der Identität der Behandlungszusammensetzung bestimmt wird, die in Schritt (c) ausgewählt wurde, und die in einem Bereich von 2 Gew.-% bis 12 Gew.-% relativ zum Gewicht des zu behandelnden Bodens liegt;
(e) Ausheben eines Volumens des schadstoffbelasteten Bodens von dem Grundstück;
(f) Zusammenführen der ausgewählten Behandlungszusammensetzung mit dem ausgehobenen Boden in einem Verhältnis, welches zu der berechneten effektiven Menge korrespondiert;
(g) mechanisches Mischen des ausgehobenen Bodens mit der Bodenbehandlungszusammensetzung; und
(h) Belüften des behandelten Bodens durch Vorbeiführen desselben über Siebmaschinen;
und optional:
(i) Konditionieren des behandelten Bodens durch Mischen mit Wasser
und/oder Bindemittel;
und anschließendes Durchführen wenigstens einer der nachfolgenden Schritte:
(j) Rückfüllen des ausgehobenen Grundstücks mit dem behandelten Boden;
(k) Lagern des behandelten Bodens für eine zukünftige Verwendung;
(I) Bereithalten des behandelten Bodens zur Landverfüllung;
(m) Abtransportieren des behandelten Bodens zur Verwendung auf einem anderen Grundstück.

2. Ein Bodenbehandlungsverfahren nach Anspruch 1, wobei die in Schritt (c) ausgewählte Behandlungszusammensetzung eine oder mehrere der Komponenten ausgewählt von Karbonaten, Oxiden und Hydroxiden von Calcium umfasst, vorzugsweise umfassend, und besonders bevorzugt im wesentlichen bestehend aus Calciumoxid (ungelöschtem Kalk).

3. Ein Bodenbehandlungsverfahren nach einem der vorhergehenden Ansprüche zum Behandeln von Boden, der mit flüchtigen organischen Verbindungen und/oder Hydrokarbonaten kontaminiert ist.

4. Ein Bodenbehandlungsverfahren nach Anspruch 3, wobei die im Schritt (b) identifizierten Hydrokarbonatschadstoffe als Ottokraftstoff, Diesel oder Öle anhand der Zahl der Kohlenstoffatome der Moleküle charakterisiert sind und/oder der analysierte Boden als granular, Schluff oder Lehm anhand der Partikelgröße charakterisiert ist.

5. Ein Bodenbehandlungsverfahren nach Anspruch 4, vorbei:
- der Hydrokarbonatschadstoff charakterisiert ist als Ottokraftstoff und die effektive Menge der Behandlungszusammensetzung, die in Schritt (d) berechnet wurde, in einem Bereich von 2 Gew.-% bis 6 Gew.-% relativ zum Gewicht des zu behandelnden Bodens liegt; oder
- der Hydrokarbonatschadstoff charakterisiert ist als Diesel und die effektive Menge der Behandlungszusammensetzung, die in Schritt (d) berechnet wurde, in einem Bereich von 3 Gew.-% bis 8 Gew.-% relativ zum Gewicht des zu behandelnden Bodens liegt; oder
- der Hydrokarbonatschadstoff als Öl charakterisiert ist und die effektive Menge der Behandlungszusammensetzung, die in Schritt (d) berechnet wurde, in einem Bereich von 6 Gew.-% bis 12 Gew.-% liegt, relativ zum Gewicht des zu behandelnden Bodens.

6. Ein Bodenbehandlungsverfahren nach Anspruch 4 oder Anspruch 5, wobei:
- der Boden als granular charakterisiert ist und die effektive Menge der Behandlungszusammensetzung, die in Schritt (d) berechnet wurde, in einem Bereich von 2 Gew.-% bis 6 Gew.-% relativ zum Gewicht des zu behandelnden Bodens liegt; oder
- der Boden als Schluff charakterisiert ist und die effektive Menge der Behandlungszusammensetzung, die in Schritt (d) berechnet wurde, in einem Bereich von 3 Gew.-% bis 9 Gew.-% relativ zum Gewicht des zu behandelnden Bodens liegt; oder
- der Boden als Lehm charakterisiert ist und die effektive Menge der Behandlungszusammensetzung, die in Schritt (d) berechnet wurde, in einem Bereich von 4 Gew.-% bis 12 Gew.-% relativ zum Gewicht des zu behandelnden Bodens liegt.

7. Ein Bodenbehandlungsverfahren nach Anspruch 4, worin der Hydrokarbonatschadstoff als Ottokraftstoff charakterisiert ist und wobei:
- der Boden als granular charakterisiert ist und die effektive Menge der Behandlungszusammensetzung, die in Schritt (d) berechnet wurde, in einem Bereich von 2 Gew.-% bis 6 Gew.-% relativ zum Gewicht des zu behandelnden Bodens liegt; oder
- der Boden als Schluff charakterisiert ist und die effektive Menge der Behandlungszusammensetzung, die in Schritt (d) berechnet wurde, in einem Bereich von 3 Gew.-% bis 6 Gew.-% relativ zum Gewicht des zu behandelnden Bodens liegt; oder
- der Boden als Lehm charakterisiert ist und die effektive Menge der Behandlungszusammensetzung, die in Schritt (d) berechnet wurde, in einem Bereich von 4 Gew.-% bis 6 Gew.-% relativ zum Gewicht des zu behandelnden Bodens liegt.

8. Ein Bodenbehandlungsverfahren nach Anspruch 4, wobei der Hydrokarbonatschadstoff als Diesel charakterisiert ist und wobei:
- der Boden als granular charakterisiert ist und die effektive Menge der Behandlungszusammensetzung, die in Schritt (d) berechnet wurde, in einem Bereich von 3 Gew.-% bis 6 Gew.-% relativ zum Gewicht des zu behandelnden Bodens liegt; oder
- der Boden als Schluff charakterisiert ist und die effektive Menge der Behandlungszusammensetzung, die in Schritt (d) rechnet wurde, in einem Bereich von 3 Gew.-% bis 8 Gew.-% relativ zum Gewicht des zu behandelnden Bodens liegt; oder
- der Boden als Lehm charakterisiert ist und die effektive Menge der Behandlungszusammensetzung, die in Schritt (d) berechnet wurde, in einem Bereich von 4 Gew.-% bis 8 Gew.-% relativ zum Gewicht des zu behandelnden Bodens liegt.

9. Ein Bodenbehandlungsverfahren nach Anspruch 4, wobei der Hydrokarbonatschadstoff als Öl charakterisiert ist und wobei:
- der Boden als granular charakterisiert ist und die effektive Menge der Behandlungszusammensetzung, die in Schritt (d) berechnet wurde, im Wesentlichen bei 6 Gew.-% relativ zum Gewicht des zu behandelnden Bodens liegt.
- der Boden als Schluff charakterisiert ist und die effektive Menge der Behandlungszusammensetzung, die in Schritt (d) berechnet wurde, in einem Bereich von 6 Gew.-% bis 9 Gew.-% relativ zum Gewicht des zu behandelnden Bodens liegt; oder
- der Boden als Lehm charakterisiert ist und die Menge der Behandlungszusammensetzung, die in Schritt (d) berechnet wurde, in einem Bereich von 6 Gew.-% bis 12 Gew.-% relativ zum Gewicht des zu behandelnden Bodens liegt.

10. Ein Bodenbehandlungsverfahren nach einem der vorhergehenden Ansprüche, wobei die Sequenz der Verfahrensschritte (f) bis (h) wiederholt wird, bis die Menge der Schadstoffe in dem behandelten Boden bis zu einem ausreichenden Grad reduziert ist.

11. Ein Bodenbehandlungsverfahren nach Anspruch 10, wobei es dem behandelten Boden nach Schritt (h) ermöglicht wird aufzulockern, bevor Schritt (f) wiederholt wird.

12. Ein Bodenbehandlungsverfahren nach einem der vorhergehenden Ansprüche, wobei Schritt (g) das Vermahlen des ausgehobenen Bodens und/oder das Mischen der Bodenbehandlungszusammensetzung mit dem ausgehobenen Boden durch die Verwendung eines Spreaders und einer Bodenfräse und/oder das Zufügen von Wasser zu dem ausgehobenen Boden umfasst.

13. Ein Bodenbehandlungsverfahren nach einem der vorhergehenden Ansprüche, wobei Schritt (f) das Vorsieben des ausgehobenen Bodens vor dem Zufügen der Bodenbehandlungszusammensetzung umfasst.

14. Ein Bodenbehandlungsverfahren nach einem der vorhergehenden Ansprüche, wobei Schritt (h) das Anheben, Fördern und/oder Entleeren der Kombination aus dem Boden und der Behandlungszusammensetzung umfasst, um ein Belüften zu unterstützen.

15. Ein Bodenbehandlungsverfahren nach einem der vorhergehenden Ansprüche, wobei der Schadstoffgehalt in dem Boden, vorzugsweise durch Photoionisations-Detektoren, vor und/oder nach jedem Schritt in der Sequenz der Verfahrensschritte (f) bis (h), und/oder vor und/oder nach jeder Wiederholung der Sequenz der Verfahrensschritte (f) bis (h) abgeschätzt wird.

## Revendications

1. Procédé de traitement du sol sur un site contaminé par des contaminants organiques, comprenant les étapes consistant à :
(a) déterminer les caractéristiques du site, y compris la proximité des cours d'eau, des habitations et des contraintes physiques, et l'échantillonnage d'un volume de sol provenant dudit site ;
(b) analyser ledit échantillon de sol pour déterminer les caractéristiques du sol, y compris la distribution de la taille de particule et la teneur en humidité, et pour identifier et quantifier les contaminants à l'intérieur ;
(c) choisir une composition de traitement appropriée à l'identité et à la quantité desdits contaminants et audit sol et aux caractéristiques du sol déterminées dans les étapes (a) et (b) ;
(d) calculer une quantité effective de ladite composition de traitement, pour traiter lesdits contaminants dans un volume unitaire de sol sur le site, ladite quantité effective de composition de traitement étant déterminée par l'identité et la quantité desdits contaminants et du site et les caractéristiques du site déterminées dans les étapes (a) et (b) et l'identité de la composition de traitement choisie dans l'étape (c) et étant dans la gamme de 2% à 12% en poids, relativement au poids du sol traité ;
(e) excaver un volume de sol contaminé du site ;
(f) combiner ladite composition de traitement choisie avec le sol excavé selon un rapport correspondant à ladite quantité effective calculée ;
(g) mélanger mécaniquement le sol excavé avec la composition de traitement de sol ; et
(h) aérer ledit sol traité en le passant sur une machine de tamisage ;
et éventuellement :
et ensuite réaliser au moins une des étapes suivantes :
(i) conditionner ledit sol traité en le mélangeant avec de l'eau et/ou une composition de liant ;
(j) re-remplir le site excavé avec ledit sol traité ;
(k) stocker ledit sol traité pour usage ultérieur ;
(m) transporter ledit sol traité pour une utilisation sur un autre site.

2. Procédé de traitement de sol selon la revendication 1, dans lequel la composition de traitement choisie dans l'étape (c) comprend un ou plusieurs composants choisis parmi des carbonates, des oxydes et hydroxydes de calcium, et comprend de préférence et est de manière davantage préférée constituée essentiellement d'oxyde de calcium (chaux vive).

3. Procédé de traitement de sol selon l'une quelconque des revendications précédentes, pour traiter le sol contaminé avec des composés organiques volatils (VOC) et/ou des hydrocarbures.

4. Procédé de traitement de sol selon la revendication 3, dans lequel, dans l'étape (b), la contamination par les hydrocarbures identifiée est **caractérisée** comme étant de l'essence, du gazole ou du pétrole, selon le nombre d'atomes de carbone par molécule et/ou le sol analysé est **caractérisé** comme étant granulaire, boueux ou argileux, selon la taille des particules.

5. Procédé de traitement de sol selon la revendication 4, dans lequel :
- la contamination par hydrocarbure est **caractérisée** comme étant de l'essence et la quantité effective de la composition de traitement calculée dans l'étape (d) est dans la gamme de 2% à 6% en poids, relativement au poids du sol traité ; ou
- la contamination par hydrocarbure est **caractérisée** comme étant du gazole, et la quantité effective de la composition de traitement calculée dans l'étape (d) est dans la gamme de 3% à 8% en poids, relativement au poids du sol traité ; ou
- la contamination par hydrocarbure est **caractérisée** comme étant du pétrole, et la quantité effective de la composition de traitement calculée dans l'étape (d) est dans la gamme de 6% à 12% en poids, relativement au poids du sol traité.

6. Procédé de traitement de sol selon la revendication 4 ou la revendication 5, dans lequel :
- le sol est **caractérisé** comme granulaire, et la quantité effective de la composition de traitement calculée dans l'étape (d) est dans la gamme de 2% à 6% en poids, relativement au poids du sol traité ; ou
- le sol est **caractérisé** comme boueux, et la quantité effective de la composition de traitement calculée dans l'étape (d) est dans la gamme de 3% à 9% en poids, relativement au poids du sol traité ; ou
- le sol est **caractérisé** comme argileux, et la quantité effective de la composition de traitement calculée dans l'étape (d) est dans la gamme de 4% à 12% en poids, relativement au poids du sol traité.

7. Procédé de traitement de sol selon la revendication 4, dans lequel la contamination par hydrocarbures est **caractérisée** comme étant de l'essence, et dans lequel :
- le sol est **caractérisé** comme granulaire, et la quantité effective de la composition de traitement calculée dans l'étape (d) est dans la gamme de 2% à 6% en poids, relativement au poids du sol traité ; ou
- le sol est **caractérisé** comme boueux, et la quantité effective de la composition de traitement calculée dans l'étape (d) est dans la gamme de 3% à 6% en poids, relativement au poids du sol traité ; ou
- le sol est **caractérisé** comme argileux, et la quantité effective de la composition de traitement calculée dans l'étape (d) est dans la gamme de 4% à 6% en poids, relativement au poids du sol traité.

8. Procédé de traitement de sol selon la revendication 4, dans lequel la contamination par hydrocarbure est **caractérisée** comme étant du gazole et dans lequel :
- le sol est **caractérisé** comme granulaire, et la quantité effective de la composition de traitement calculée dans l'étape (d) est dans la gamme de 3% à 6% en poids, relativement au poids du sol traité ; ou
- le sol est **caractérisé** comme boueux, et la quantité effective de la composition de traitement calculée dans l'étape (d) est dans la gamme de 3% à 8% en poids, relativement au poids du sol traité ; ou
- le sol est **caractérisé** comme argileux, et la quantité effective de la composition de traitement calculée dans l'étape (d) est dans la gamme de 4% à 8% en poids, relativement au poids du sol traité.

9. Procédé de traitement de sol selon la revendication 4, dans lequel la contamination par hydrocarbure est **caractérisée** comme étant du pétrole, et dans lequel :
- le sol est **caractérisé** comme granulaire, et la quantité effective de la composition de traitement calculée dans l'étape (d) est sensiblement de 6% en poids, relativement au poids du sol traité ; ou
- le sol est **caractérisé** comme boueux, et la quantité effective de la composition de traitement calculée dans l'étape (d) est dans la gamme de 6% à 9% en poids, relativement au poids du sol traité ; ou
- le sol est **caractérisé** comme argileux, et la quantité effective de la composition de traitement calculée dans l'étape (d) est dans la gamme de 6% à 12% en poids, relativement au poids du sol traité.

10. Procédé de traitement de sol selon l'une quelconque des revendications précédentes, dans lequel la séquence des étapes (f) à (h) du procédé est répétée jusqu'à ce que la teneur en contaminant dans le sol traité soit réduite à un niveau satisfaisant.

11. Procédé de traitement de sol selon la revendication 10, dans lequel le sol traité est autorisé à s'ameublir après l'étape (h) avant de répéter l'étape (f).

12. Procédé de traitement de sol selon l'une quelconque des revendications précédentes, dans lequel l'étape (g) comprend la pulvérisation du sol excavé et/ou le mélange de la composition de traitement de sol avec le sol excavé en utilisant un vaporisateur et un motoculteur, et/ou en ajoutant de l'eau au sol excavé.

13. Procédé de traitement de sol selon l'une quelconque des revendications précédentes, dans lequel l'étape (f) comprend le pré-tamisage du sol excavé, avant l'addition de la composition de traitement de sol.

14. Procédé de traitement de sol selon l'une quelconque des revendications précédentes, dans lequel l'étape (h) comprend l'élévation, le convoyage et/ou le déchargement du sol et de la composition de traitement combinés pour promouvoir l'aération.

15. Procédé de traitement de sol selon l'une quelconque des revendications précédentes, dans lequel la teneur en contaminant dans le sol est évaluée, de préférence par détection de photo-ionisation (PID) avant et/ou après chaque étape dans la séquence des étapes (f) à (h) du procédé et/ou avant et/ou après chaque répétition de la séquence des étapes (f) à (h) du procédé.
